# EUROPÄISCHE PATENTSCHRIFT

(11) **EP 3 094 880 B1**
(45) Veröffentlichungstag und Bekanntmachung des Hinweises auf die Patenterteilung: **17.06.2020**
(21) Anmeldenummer: 14821550.2
(22) Anmeldetag: 15.12.2014
(51) Int. Cl.: F16D 13/64, F16D 13/68, F16D 13/69

(54) **REIBSCHALTELEMENT FÜR EIN GETRIEBE EINES FAHRZEUGES**
FRICTIONAL SHIFTING ELEMENT FOR A VEHICLE TRANSMISSION
ÉLÉMENT DE CHANGEMENT DE VITESSES À FRICTION POUR BOÎTE DE VITESSES D'UN VÉHICULE AUTOMOBILE

(30) Priorität: 17.01.2014 DE 102014200854
(43) Veröffentlichungstag der Anmeldung: 23.11.2016
(73) Patentinhaber: ZF Friedrichshafen AG, 88046 Friedrichshafen (DE)
(72) Erfinder: REISCH, Matthias, 88214 Ravensburg (DE); ZIEMER, Peter, 88069 Tettnang (DE); BECK, Stefan, 88097 Eriskirch (DE); SIBLA, Christian, 88097 Eriskirch (DE)
(74) Vertreter: ZF Friedrichshafen AG
(86) Internationale Anmeldenummer: PCT/EP2014/077708
(87) Internationale Veröffentlichungsnummer: WO 2015/106900

(56) Entgegenhaltungen:
- EP-A2- 0 945 636
- DE-A1- 10 315 169
- GB-A- 814 992
- US-A- 4 356 901

## Beschreibung

Die vorliegende Erfindung betrifft ein Reibschaltelement für ein Getriebe eines Fahrzeuges gemäß der im Oberbegriff des Patentanspruches 1 näher definierten Art.

Beispielsweise aus der Druckschrift DE 10 2009 001 101 A1 ist ein Getriebe mit mehreren reibschlüssigen Schaltelementen zur Darstellung verschiedener Übersetzungen bekannt. Die reibschlüssigen Schaltelemente sind als Lamellenschaltelemente ausgebildet, wobei die Innenlamellen und die Außenlamellen mit belaglosen Reibflächen ausgeführt sind, um die zulässige Flächenpressung zu erhöhen, so dass das Schaltelement bei gleicher Übertragungsfähigkeit kleiner dimensionierbar ist und im geöffneten Betriebszustand geringere Schleppmomente verursacht.

Aus der Druckschrift EP 0945636 A2 und aus der US 4356901 A ist jeweils ein Reibschaltelement für ein Getriebe eines Fahrzeuges gemäß der im Oberbegriff des Patentanspruches 1 näher definierten Art bekannt, wobei die in diesen Druckschriften offenbarten kragenden Elemente als Distanzierungselemente zur Zwangsdistanzierung von Reibelementen im unbetätigten Zustand des Reibschaltelementes ausgebildet sind.

Die DE 103 15 169 A1 offenbart eine Kupplungsanordnung, insbesondere für ein Kraftfahrzeug, umfassend eine mit Fluid gefüllte oder füllbare Gehäuseanordnung, wenigstens ein mit der Gehäuseanordnung um eine Drehachse gemeinsam drehbares erstes Reiborgan, wenigstens ein mit einem Abtriebsorgan um die Drehachse gemeinsam drehbares zweites Reiborgan, das zur Herstellung einer Reibwechselwirkung in Anlage an wenigstens einem ersten Reiborgan bringbar ist, und ist dadurch gekennzeichnet, dass das wenigstens eine erste Reiborgan oder das wenigstens eine zweite Reiborgan einen Reibbelagträger aufweist, der an jeder axialen Seite, an der dieses Reiborgan reibend wirksam ist, eine Reibbelaganordnung trägt, dass wenigstens bei einem einen Reibbelagträger mit Reibbelaganordnung aufweisenden Reiborgan eine Fluidförderflächenanordnung zur Erzeugung einer die Reiborgane wenigstens bereichsweise umströmenden Fluidzirkulation vorgesehen ist.

Die GB814992 offenbart eine angetriebene Platte für eine Kupplung, einschließlich einer angetriebenen Plattenscheibe und Reibbelagbeschichtungen auf beiden Seiten der Scheibe, wobei ein Teil der Reibbelagbeschichtung, der auf mindestens einer Stirnfläche der Scheibe liegt, an Blattfedern befestigt ist, die auf der Scheibe montiert sind, wobei die Anordnung derart ist, dass wenn die angetriebene Platte zwischen einer Druckplatte und einer Gegendruckplatte gegriffen wird, die Federn abgelenkt werden und es Bereiche gibt, in denen die Reibbelagbeschichtung und die Scheibe in direktem Kontakt sind, und wenn die Druckplatte und die Gegendruckplatte auseinanderbewegt werden, das federnde Flächenteil sich axial von der Scheibe wegbewegt, um in seinen vorgestalteten Zustand zurückzukehren.

Ferner ist aus der Druckschrift DE 10 2009 027 017 A1 ein Lamellenpaket für eine Lamellenbremse oder eine Lamellenkupplung bekannt, bei der eine federnde Wirkung in die Lamellen integriert wird, so dass eine gewünschte Distanzierung zwischen den Lamellen auch im geöffneten Zustand des Lamellenpaketes vorgesehen ist. Somit ergibt sich ein Lüftspiel im gesamten Lamellenpaket.

Der vorliegenden Erfindung liegt die Aufgabe zu Grunde ein Reibschaltelement für ein Getriebe eines Fahrzeuges vorzuschlagen, welches möglichst kostengünstig herstellbar ist und möglichst geringe Schleppmomente verursacht.

Die vorliegende Erfindung wird durch die Merkmale des Patentanspruches 1 gelöst, wobei sich vorteilhafte Ausgestaltungen aus den Unteransprüchen, der Beschreibung und den Zeichnungen ergeben.

Es wird ein Reibschaltelement zum Beispiel in Lamellenbauweise oder dergleichen für ein Getriebe, insbesondere ein Automatgetriebe eines Fahrzeuges vorgeschlagen. Es ist zumindest ein einem ersten Träger, zum Beispiel einem Innenlamellenträger oder Außenlamellenträger, zugeordnetes erstes Reibelement und zumindest ein einem zweiten Träger, zum Beispiel einem Außenlamellenträger oder Innenlamellenträger, zugeordnetes zweites Reibelement vorgesehen, wobei ein ers-tes Reibelement, z.B. eine Innenlamelle oder Außenlamelle, und ein zweites Reibelement, z.B. eine Außenlamelle oder Innenlamelle, als Reibpartner mit sich überdeckenden Reibflächen zur Drehmomentübertragung in Kontakt bringbar sind. Mehrere Reibelemente bilden ein Lamellenpaket, wobei erste und zweite Reibelemente abwechselnd axial hintereinander angeordnet sind und über eine Betätigung im geschlossenen Zustand des Reibschaltelementes gegeneinander gepresst werden, um die Drehmomentübertragung jeweils zwischen den Paketen von ersten und zweiten Reibelementen zu realisieren.

Erfindungsgemäß ist vorgesehen, dass das erste oder das zweite Reibelement eine etwa ringförmig ausgeführte Reibfläche aufweist, wobei das jeweils andere Reibelement als korrespondierende Reibfläche zumindest ein radial in den Überdeckungsbereich kragendes Reibflächenelement oder dergleichen aufweist.

Auf diese Weise wird die Kontaktfläche bzw. werden die korrespondierenden Reibflächen zwischen den beiden Reibungselementen reduziert, indem in Umfangsrichtung die Reibfläche durch das Vorsehen einzelner Reibnasen oder Reibzähne an einem der Reibelemente, also entweder am ersten oder am zweiten Reibelement, mehrfach unterbrochen wird. Die Unterbrechungen in Umfangsrichtung werden z.B. durch Aussparungen zwischen vorgesehenen Reibflächenelementen bzw. Reibnasen oder Reibzähne realisiert. Demzufolge sind die miteinander in Reibschluss bringbaren ersten und zweiten Reibelemente, abgesehen von den jeweils vorkragenden Reibflächenelementen, in radialer Richtung zur Reduzierung des Überdeckungsbereiches bzw. zur Reduzierung der sich überdeckenden Reibflächen voneinander beabstandet. Hierdurch kann das Kühl- und/oder Schmiermittel, zum Beispiel Öl oder dergleichen nahezu ungehindert radial durchströmen. Des Weiteren wird die Kontaktfläche, in der durch Scherung des Kühl- und Schmiermittels Schleppmomente erzeugt wird, auf ein Minimum begrenzt.

Vorzugsweise kann das jeweils vorgesehene Reibflächenelement an das jeweilige Reibelement einteilig angeformt sein. Hierdurch ergeben sich weitere Kostenvorteile bei der Herstellung des vorgeschlagenen Reibschaltelementes.

Bevorzugter Weise kann im Rahmen einer vorteilhaften Ausführungsvariante der Erfindung vorgesehen sein, dass das Reibschaltelement als nasslaufendes Reibschaltelement ausgeführt ist, bei dem ein Fluid, vorzugsweise Öl zur Schmierung und Kühlung durch das Reibelementpaket bzw. Lamellenpaket im Bereich der Reibflächen geführt wird.

Vorzugsweise kann das vorgeschlagene Reibschaltelement in Automatgetrieben als ab schaltendes Schaltelement verwendet werden, da mit derartigen Schaltelementen vollwertige Lastschaltungen möglich sind, ohne dieses Reibschaltelement thermisch zu belasten. Ein ab schaltendes Schaltelement ist dadurch gekennzeichnet, dass das Reibschaltelement im kleinsten Gang geschlossen ist, im höchsten Gang geöffnet ist und beim sequenziellen Durchschalten sämtlicher Gangstufen nur einmal den Schaltzustand ändert.

Somit ergeben sich bei dem vorgeschlagenen Schaltelement besonders geringe Schleppmomente, wodurch der Kraftstoffverbrauch des Fahrzeuges erheblich reduziert wird. Ferner ergibt sich aufgrund der reduzierten Reibflächen eine geringere Masse und ein geringer Bauraumbedarf sowie geringere Kosten bei der Herstellung. Ferner ergibt sich ein geringeres Massenträgheitsmoment, wodurch eine bessere Fahrdynamik bei einem mit dem erfindungsgemäßen Reibschaltelement im Getriebe vorgesehenen Fahrzeug realisiert werden kann.

Gemäß eines anderen Aspektes der vorliegenden Erfindung ist vorgesehen, dass zumindest ein Reibelement von jeweils benachbarten ersten und zweiten Reibelementen an den einander zugewandten Reibflächen im Querschnitt bzw. in axialer Richtung abgeschrägt, konisch bzw. axial verjüngt ausgeführt sind. Dadurch, dass zum Beispiel die inneren und/oder die äußeren Reibelemente abgeflacht oder dergleichen ausgeführt sind, ergibt sich eine axiale Bauraumeinsparung. Ferner wird gleichzeitig eine höhere Festigkeit erzielt, da die Lamellen bzw. Reibelemente in den hoch belasteten Bereichen dicker beziehungsweise stärker ausgeführt sind. Als hoch belastete Bereiche werden insbesondere Bereiche bezeichnet, wo die Mitnahmeverzahnung an den Reibelementen vorgesehen ist. Zudem ergibt sich eine bessere Wärmeableitung, da die Reibflächenelemente eine großflächigere Anbindung an den Ringquerschnitt jedes Reibelementes haben. Somit ergibt sich eine höhere thermische Belastbarkeit. Durch die Abflachung bzw. Konuswirkung sind in vorteilhafter Weise zudem geringere axiale Anpresskräfte erforderlich, um das Reibschaltelement zu schließen. Ferner ist ein geringerer Umformgrad bei der Herstellung des Reibschaltelementes erforderlich.

Ein nächster Aspekt der Erfindung liegt darin, bei dem vorgeschlagenen Reibschaltelement eine Zwangsdistanzierung vorzusehen, wodurch benachbarte Reibelemente auch im geöffneten Zustand auf Abstand gehalten werden und im belasteten Zustand, also bei geschlossenem Reibschaltelement, keine Wirkung haben. Die Zwangsdistanzierung kann z.B. dadurch erreicht werden, dass an zumindest einem Reibflächenelement in Umfangsrichtung zumindest ein in axialer Richtung des Reibelementes federndes Federlaschenelement oder dergleichen vorgesehen ist. Durch diese Zwangsdistanzierung der Reibelemente in einem Lamellenpakte kann Kühl- und/oder Schmiermittel mit geringerem Strömungswiderstand radial durchströmen. Somit werden die Scherkräfte im Zwischenraum geringer und das Schleppmoment sinkt.

Das Reibschaltelement kann hydraulisch, pneumatische, elektromechanisch oder mechanisch betätigt werden. Vorzugsweise wird das nasslaufende Reibschaltelement hydraulisch betätigt, da als Hydraulikmittel das vorhandene Kühl- und Schmiermittel verwendet werden kann. Die Reibelemente des vorgeschlagenen Reibschaltelementes können aus Blech, Stahl oder dergleichen gefertigt sein. Der Stahl kann Kohlenstoff beinhalten, zum Beispiel C15, C60, C75. Die Reibelemente können gehärtet ausgeführt sein, z.B. nitrocarburiert oder gasnitriert sein. Als Beschichtung der Reibelemente kann analog zu Synchronisierungen, z.B. Sinter, Molybdän, Carbon oder dergleichen vorgesehen sein. Ferner kann zumindest eines der Reibelemente eine Nut oder dergleichen, zum Beispiel eine Parallelnut, Waffelnut, Flaschenhalsnut analog zu Papierbelägen aufweisen.

Das vorgeschlagene Reibschaltelement kann in einem Lastschaltgetriebe eingesetzt werden. Es ist auch denkbar, dass das Reibschaltelement in ein stufenloses Mehrbereichsgetriebe oder in einem elektrischen Fahrzeugantrieb eingesetzt wird. Weitere mögliche Anwendungen sind als Allradabkopplung, Retarderabkopplungen, Wendegruppe und als Bereichsgruppe.

Die vorliegende Erfindung beansprucht neben dem vorbeschriebenen Reibschaltelement ebenso auch ein Automatikgetriebe für ein Fahrzeug mit einem derartig gestalteten Reibschaltelement.

Nachfolgend wird die vorliegende Erfindung anhand der Zeichnungen weiter erläutert. Es zeigen:
Figur 1 und 2 verschiedene Teilansichten eines erfindungsgemäßen Reibschaltelementes mit einem als Innenlamelle ausgeführten Reibelement mit mehreren radial nach außen vorstehenden Reibflächenelementen;
Figur 3 und 4 mehrere Teilansichten des Reibschaltelementes mit einem als Außenlamelle ausgeführten Reibelement mit mehreren radial nach innen vorstehenden Reibflächenelementen;
Figur 5 und 5A mehrere Teilansichten eines über mehrere Radien an eine Innenlamelle angeformten Reibflächenelementes;
Figuren 6 und 7 mehrere Teilansichten des Reibschaltelementes mit in Umfangsrichtung beidseitig vorgesehenen rippenförmigen Verstärkungen an dem Reibflächenelement;
Figur 8 bis 16 verschiedene Teilansichten des Reibschaltelementes mit in Umfangsrichtung an das Reibflächenelement angeformten Federlaschenelementen zur Zwangsdistanzierung von benachbarten Reibelementen;
Figur 17 eine schematische Ansicht des Reibschaltelementes als Lamellenpaket mit im Bereich der jeweiligen Mitnahmeverzahnung über Federelemente zwangsdistanzierte Reibelemente;
Figur 18 eine schematische Ansicht des Reibschaltelementes als Lamellenpaket mit an den korrespondierenden Reibflächen abgeschrägten und somit konusförmigen Reibelementen;
Figur 19 eine schematische Ansicht des Reibschaltelementes als Lamellenpaket mit im Bereich der Reibflächenelemente eine geringere axiale Dicke aufweisenden Reibelementen;
Figur 20 eine schematische Ansicht des Reibschaltelementes als Lamellenpaket mit im Bereich der ringförmigen Reibflächen eine geringere axiale Dicke aufweisenden Reibelementen;
Figur 21 eine schematische Ansicht des Reibschaltelementes als Lamellenpaket mit im Bereich der ringförmigen Reibflächen und im Bereich des Reibflächenelementes eine geringere axiale Dicke aufweisenden Reibelementen;
Figuren 22 und 23 mehrere Detailansichten des Reibschaltelementes mit in Umfangsrichtung am Einlauf- und Auslaufbereich Fasen oder Radien aufweisenden Reibflächenelementen ;
Figur 24 eine schematische Ansicht des Reibschaltelementes als Lamellenpaket mit an einem gemeinsamen Träger befestigten Reibelementen mit in axialer Richtung deckungsgleich hintereinander angeordneten Reibflächenelementen;
Figur 25 eine schematische Ansicht eines das in Figur 24 gezeigte innere Reibelement drehfest aufnehmenden Innenlamellen-Trägers mit angepasster Mitnahmeverzahnung; und
Figuren 26 und 27 verschiedene schematische Teilansichten des Reibschaltelementes als Lamellenpaket mit einem am Ende des Lamellenpaketes vorgesehenen und vom mittleren Reibflächenradius nach außen hin in axialer Richtung beabstandeten Stützelement.

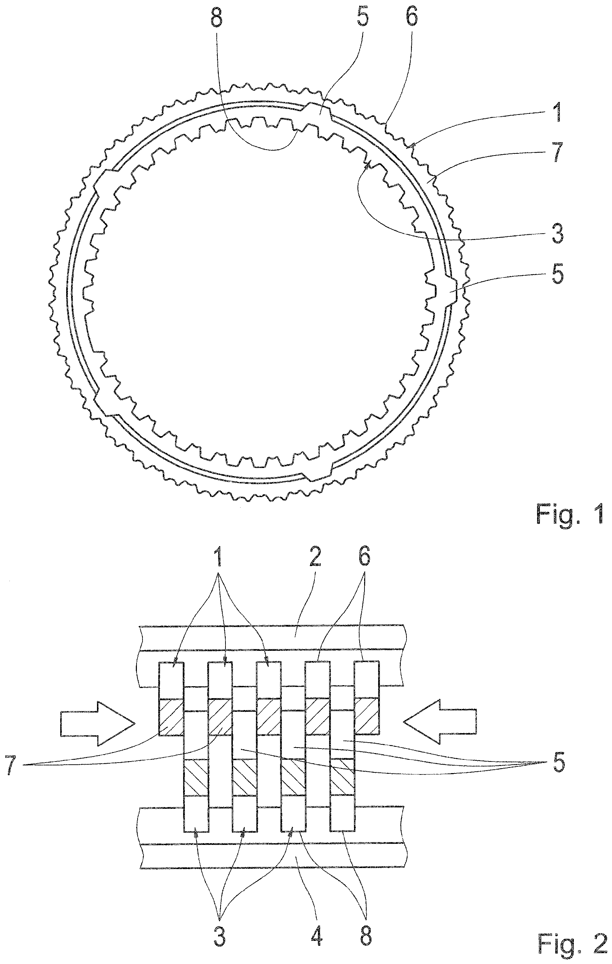

In Figuren 1 bis 27 sind verschiedene Ausführungsvarianten eines erfindungsgemäßen Reibschaltelementes für ein Getriebe eines Fahrzeuges beispielhaft als Lamellenschaltelement dargestellt.

Das Reibschaltelement umfasst mehrere erste Reibelemente 1, die drehfest an einem ersten Träger 2 befestigt sind und mehrere zweite Reibelemente 3, die an einem zweiten Träger 4 drehfest befestigt sind. Die ersten und zweiten Reibelemente 1, 3 sind abwechselnd hintereinander als Lamellenpaket angeordnet, so dass sich jeweils zwischen einem ersten Reibelement 1 und einen zweiten Reibelement 2 überdeckende Reibflächen ergeben. Zur Drehmomentübertragung werden die Reibelemente 1 und 3 axial zusammen gepresst.

Die ersten oder zweiten Reibelemente 1, 3 weisen jeweils eine etwa ringförmig ausgeführte Reibfläche auf, wobei die jeweils anderen Reibelemente 1, 3 als korrespondierende Reibfläche mehrere radiale in Überdeckungsbereich kragende Reibflächenelemente 5 aufweisen.

In den Figuren 1 und 2 ist eine Ausführungsvariante vorgesehen, bei der die ersten Reibelemente 1 als Außenlamellen und die zweiten Reibelemente 3 als Innenlamelle ausgeführt sind, wobei die jeweils etwa ringförmig ausgeführte Außenlamelle eine äußere Mitnahmeverzahnung 6 zum Verbinden mit dem Außenlamellen-Träger 2 und eine etwa ringförmige Reibfläche 7 aufweist. Die Innenlamelle, also das zweite Reibelement 3, weist eine innere Mitnahmeverzahnung 8 zum Verbinden mit dem Innenlamellen-Träger 4 und mehrere über den Umfang verteilt radial nach außen kragende und in Überdeckung mit der ringförmigen Reibfläche 7 der Außenlamelle stehende Reibflächenelemente 5 auf.

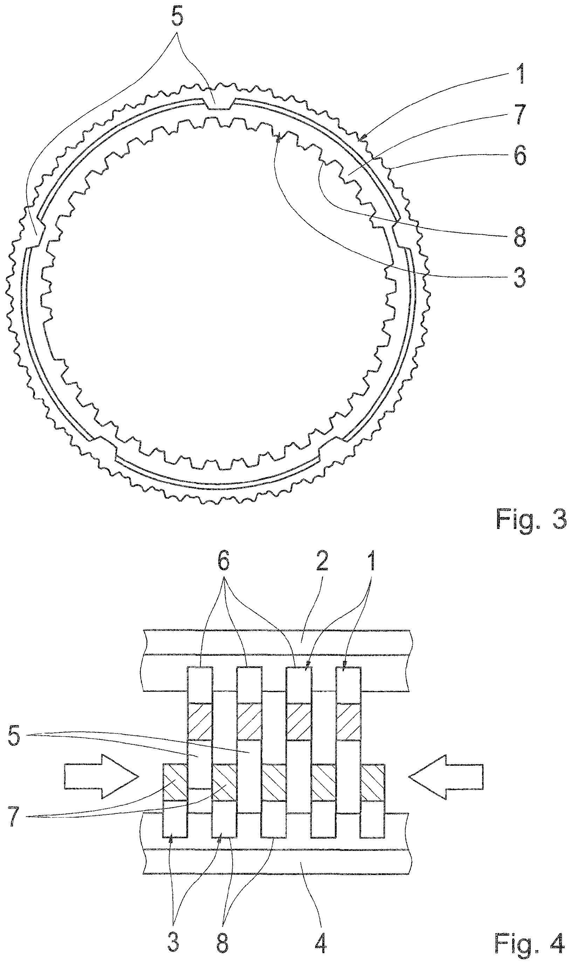

Bei der in den Figuren 3 und 4 dargestellten Ausführungsvariante sind im Gegensatz zu der in den Figuren 1 und 2 dargestellten Ausführungsvariante die Reibflächenelemente 5 an dem als Außenlamellen vorgesehenen ersten Reibelementen 1 und die ringförmige Reibfläche 7 an den als Innenlamellen ausgeführten zweiten Reibelementen 3 vorgesehen. Die Reibflächenelemente 5 sind über den Umfang verteilt radial nach innen kragende und in Überdeckung mit der ringförmigen Reibfläche 7 angeordnet. Die in Figur 2 und 4 dargestellten Pfeile an den Lamellenpakten verdeutlichen die wirkenden Axialkräfte zum Schließen des erfindungsgemäßen Reibschaltelementes.

Unabhängig von den beiden Ausführungsvarianten gemäß Figuren 1 bis 4 ist vorgesehen, dass die miteinander in Reibschluss bringbaren ersten und zweiten Reibelemente 1, 3, abgesehen von den vorkragenden Reibflächenelementen 5, in radialer Richtung voneinander beabstandet sind.

Die Reibflächenelemente 5 sind einteilig an die ersten oder zweiten Reibelemente 1, 3 angeformt, so dass in Umfangsrichtung mehrere separate zahnförmige Reib- bzw. Kontaktflächen vorgesehen sind, die im geschlossenen Zustand des Reibschaltelementes mit der etwa ringförmigen Reibfläche 7 in Kontakt bringbar sind. Die Reibflächenelemente 5 sind bezüglich Längen- und Breitenverhältnis, Winkel, Kantenform und Oberflächenstruktur optimierbar, um ein möglichst kostengünstig herstellbares und ein geringes Schleppmoment aufweisendes Reibschaltelement zu schaffen.

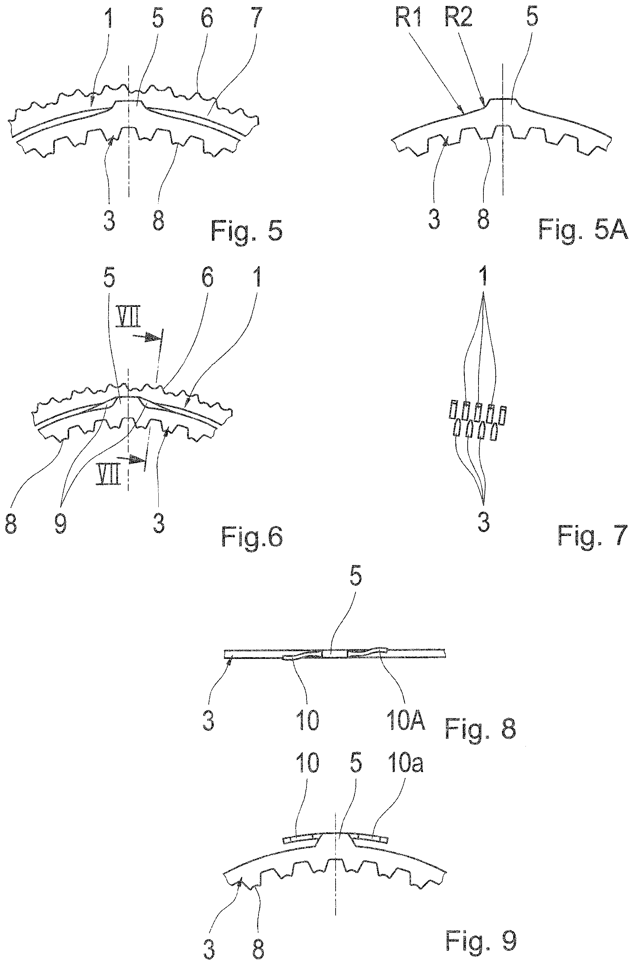

Figuren 5 und 5A zeigen Detailansichten des an dem Grundkörper des zweiten Reibelementes 3 angeformten Reibflächenelementes 5 anhand der Ausführungsvariante gemäß Figuren 1 und 2. Zur Erhöhung der mechanischen Festigkeit des mit dem Reibflächenelement 5 einteilig ausgeführten Reibelementes 3 ist vorgesehen, dass der Ringquerschnitt in Richtung des Reibflächenelementes 5 vergrößert ist. Dies bedeutet, dass bei der in Figuren 5 und 5A gezeigten Ausführung der Außenumfang des etwa ringförmigen Reibelementes 3 im Bereich des angeformten Reibflächenelementes 5 vergrößert ist. In Figur 5A ist das zahnförmige Reibflächenelement 5 über unterschiedliche hintereinander liegende Radien R1, R2 an das ringförmige Reibelement 3 angeformt. Der Radius im Bereich des äußeren Umfanges des ringförmigen Grundkörpers des Reibelementes 3 ist größer als am Ende der zahnförmigen Reibfläche des Reibflächenelementes 5. Auf diese Weise ist der Übergang des auskragenden Reibflächenelementes 5 zum Grundkörper bezüglich seines Spannungsverlaufes optimiert. Der Ringquerschnitt vergrößert sich in Richtung des Reibflächenelementes 5, wodurch sich das Lamellenpaket insgesamt radial kompakter bauen lässt. Demzufolge leitet das Reibflächenelement 5 bei Kraftübertragung ein Biegemoment in die ringförmige Geometrie ein. Um den daraus resultierenden Spannungsverlauf an dem Reibelement 3 günstig zu gestalten, ist es sinnvoll, die Krümmung ausgehend von der Ringgeometrie zunächst mit einem größeren Radius R1 (langer Pfeif) zu beginnen und mit einem kleineren Radius R2 (kurzer Pfeil) in Richtung Reibflächenelement 5 weiterzuführen. Der Geometrieverlauf bzw. Radienverlauf an dem Reibflächenelement 5 ist an den beiden Seiten des Reibzahnes bzw. des Reibflächenelementes 5 unterschiedlich darstellbar (Vorzugsdrehrichtung).

In Figur 6 ist eine Seitenteilansicht des Reibschaltelementes dargestellt, wobei in Figur 7 eine entlang der Schnittlinie VII des VII geschnittene Ansicht gezeigt ist. Bei der dargestellten Ausführung ist in Umfangsrichtung beidseitig eine rippenförmige Verstärkung 9 an das Reibflächenelement 5 angeformt. Angrenzend an den Bereich des nach außen kragenden Reibflächenelementes 5 befindet sich somit ein Bereich mit verminderter Lamellenbreite bzw. -dicke, um eine Festigkeitserhöhung ohne Vergrößerung der Reibfläche des Reibflächenelementes 5 zu erzielen. Die verminderte Lamellenbreite kann zum Beispiel als Anschrägung neben den eigentlichen Reibflächen des Reibflächenelementes 5 durch Umformtechnik erzeugt werden. Die dadurch gebildete Rippe stützt das Reibflächenelement 5 mechanisch. Durch diesen Festigkeitsgewinn kann das Lamellenpaket zusätzlich kompakter ausgelegt werden. Dies ist zudem kostengünstig und erhöht die Werkstofffestigkeit bzw. Kaltverfestigung.

In Figur 8 ist eine Draufsicht auf einen mit dem Reibflächenelement 5 versehenen Reibelement 1, 3 dargestellt, wobei in Umfangsrichtung beidseitig des Reibflächenelementes 5 jeweils ein Federlaschenelement 10 und 10A zur Zwangsdistanzierung vorgesehen ist.

Wie insbesondere aus Figur 8, 10, 12 bis 15 ersichtlich ist, sind die Federlaschenelemente 10, 10A in axialer Richtung des jeweiligen Reibelementes 1, 3 federnd ausgeführt und stehen im unbetätigten Zustand des Reibschaltelementes in axialer Richtung von den Reibflächen des Reibelementes 1 bzw. 3 vor. Vorzugsweise sind die Federlaschenelemente 10, 10A einteilig mit dem Reibflächenelement 5 ausgeführt, wie insbesondere aus den Figuren 9, 11, 14 und 16 ersichtlich ist.

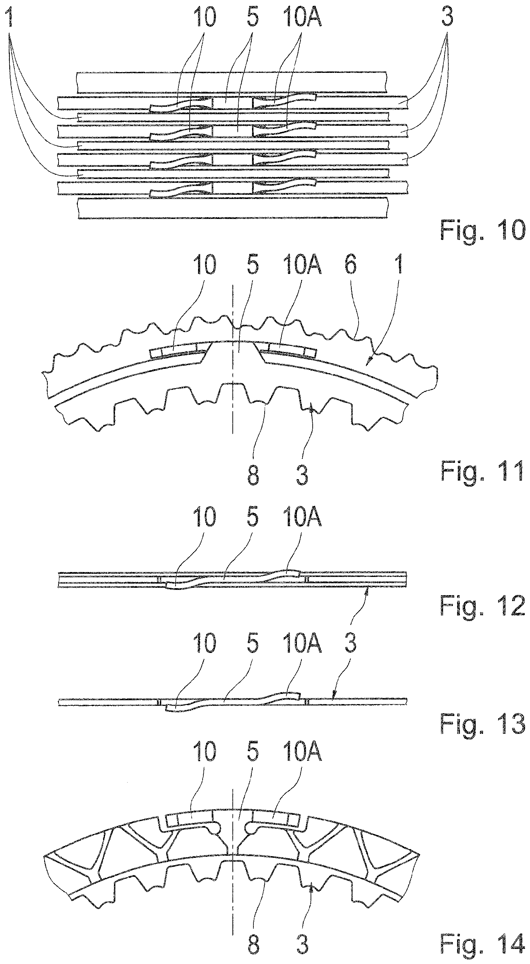

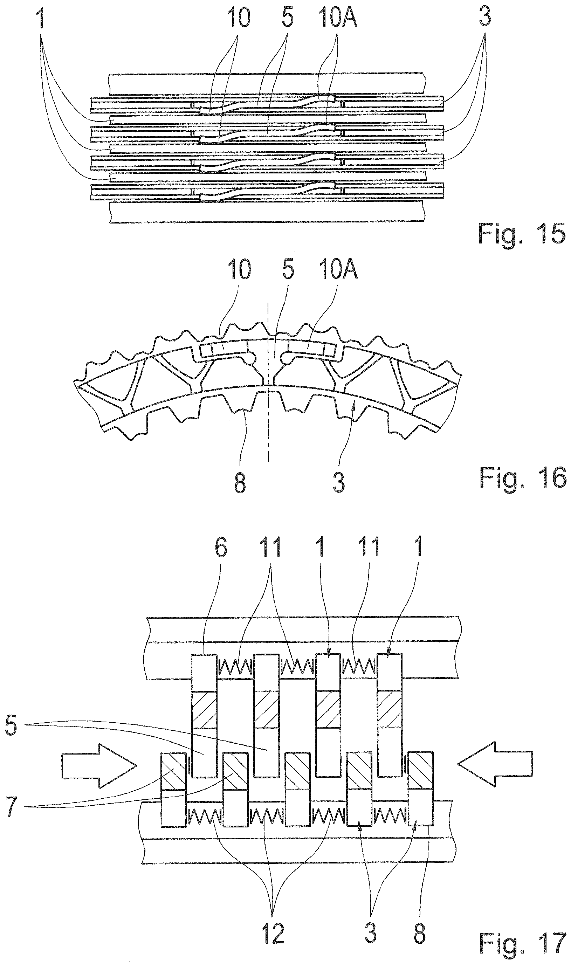

Vorzugsweise sind die Federlaschenelemente 10, 10A an jedem Reibflächenelement 5 in axialer Richtung entgegengesetzt von dem jeweiligen Reibelement 1, 3 vorstehend angeordnet. Bei einem aus mehreren Reibelementen 1, 3 bestehenden Lamellenpaket, wie insbesondere in Figur 10 und 15 dargestellt, wirken die Federlaschenelemente 10, 10A an einem Reibelement 1 bzw. 3 axial entgegengesetzt auf benachbarte Reibelemente 1 bzw. 3 desselben Lamellen-Trägers 2 bzw. 4. Das Reibschaltelement ist in den Figuren 10 und 15 geöffnet, d.h., die Lamellen bzw. Reibelemente 1, 3 sind in gelüftetem Zustand. Es ist ersichtlich, wie die Federlaschenelemente 10, 10A benachbarte Reibelemente 1 auf Abstand halten. Durch diesen sichergestellten Abstand wird das durch den Zwischenraum strömende Kühlmittel- und Schmieröl weniger geschert und erzeugt dadurch weniger Schleppmomente.

Unabhängig von der jeweiligen Ausführungen der Federlaschenelemente 10, 10A werden benachbarte Reibelemente 1, 3 auf Abstand gehalten. Im belasteten Zustand, also im geschlossenen Zustand des Reibschaltelementes, werden die Federlaschenelemente 10, 10A zusammen- bzw. weggedrückt und die eigentlichen Reibflächen kommen in Kontakt. Um eine besonders gute Funktion der Zwangsdistanzierung zu gewährleisten, ist es zielführend, die Federlaschenelemente 10, 10A dünner auszuführen als die Reibelemente 1, 3 bzw. Reibflächenelemente 5. Idealerweise sind mehrere solcher Federlaschenelemente 10, 10A über den Umfang verteilt angeordnet, um eine ordentliche Trennung der Reibelemente 1, 3 im gelüfteten Zustand zu erzielen. Die Federlaschenelemente 10, 10A müssen nicht zwangsläufig, wie hier dargestellt, an den Reibflächenelementen 5 befestigt werden. Es sind auch eigens zur Aufnahme der Federlaschenelemente 10, 10A vorgesehene Mitnehmer oder dergleichen einsetzbar. In diesem Fall ist die Aufnahme für die Federlaschenelemente 10, 10A ebenfalls dünner ausgeführt als das übrige Reibelement 1, 3.

Das konstruktiv vorgesehene Lüftspiel des gesamten Lamellenpaketes kann größer als die Summe der Federwege der einzelnen Reibelemente 1, 3 sein. Dies bedeutet, dass bei geöffnetem Reibschaltelement die Federlaschenelemente 10, 10A durchaus auch abheben können, d.h. sie müssen nicht zwangsläufig reiben. Dies ist insbesondere dann relevant, wenn die Federlaschenelemente 10, 10A unter Differenzdrehzahl funktionieren, also auf Reibelemente 1, 3 von unterschiedlichen Trägern 2, 4 wirken.

Beispielsweise in Figur 12, 14, 15 und 16 ist das Reibelement 3 als Belaglamelle mit einem Reibbelag zum Beispiel auch einem Papierbelag oder dergleichen dargestellt. Demgegenüber ist in Figur 13 das Reibelement 3 ohne Reibbelag dargestellt.

Eine andere Möglichkeit der Zwangsdistanzierung ist in Figur 17 dargestellt. Bei dieser Ausführung werden die Reibelemente 1, 3 desselben Lamellen-Trägers 2, 4 im Bereich der jeweiligen Mitnahmeverzahnung 6, 8 über einzelne Federelemente 11, 12 zwangsdistanziert, wobei die Federelemente 11, 12 lediglich angedeutet sind, jedoch nicht nur Feder sein können, sondern auch als Federbleche oder dergleichen ausgeführt sein können. Die Federelemente 11, 12 wirken auf Lamellen bzw. Reib-elemente 1, 3, die z.B. demselben Lamellenträger 2, 4 zugeordnet sind. Somit liegt zwischen den Reibelementen 1, 3 keine Differenzdrehzahl an. Mithilfe der Federelemente 11, 12 sind die Reibelemente 1, 3 des jeweiligen Trägers 2, 4 untereinander distanziert und die Reibelemente 1, 3 der unterschiedlichen Träger 2, 4 werden nur an zwei Reibstellen gegeneinander distanziert. Auf diese Weise wird sichergestellt, dass ein definierter Luftspalt vorgesehen ist und nur vernachlässigbar kleine Schleppmomente im offenen Zustand des Schaltelementes auftreten. Bei der in Figur 17 dargestellten Ausführung wird somit das aus Innenlamellen und Außenlamellen bestehende Lamellenpaket zentral zueinander ausgerichtet.

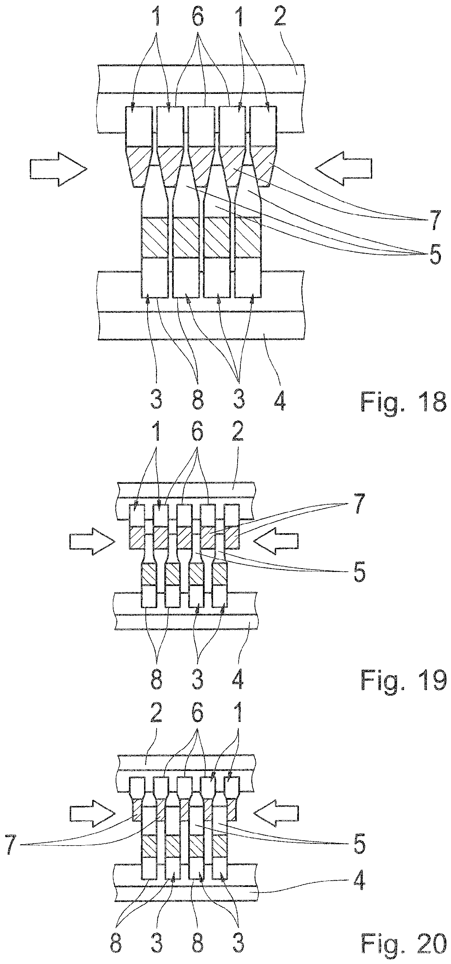

In den Figuren 18 bis 21 sind verschiedene Ausführungen des Reibschaltelementes gezeigt, durch die eine höhere mechanische Festigkeit und eine axiale Bauraumeinsparung ermöglicht wird. Ferner wird eine bessere Wärmeableitung sowie eine geringere axiale Anpresskraft erreicht und zusätzlich wird ein geringerer Umformgrad der Reibelemente 1, 3 bei der Herstellung ermöglicht.

In Figur 18 ist ein Reibschaltelement dargestellt, bei dem jeweils benachbarte erste und zweite Reibelemente 1, 3 an den einander zugewandten Reibflächen im Querschnitt abgeschrägt oder konisch ausgeführt sind. Insbesondere durch die Konuswirkung sind geringere axiale Anpresskräfte erforderlich. Bei dieser Ausführung ist die axiale Verjüngung der Reibflächenelemente 5 und der Reibflächen 7 symmetrisch ausgeführt. Es ist auch eine unsymmetrische oder einseitige Abflachung möglich.

In Figur 19 ist ein Reibschaltelement dargestellt, bei dem das Reibflächenelement 5 in axialer Richtung eine geringere Dicke als im Bereich der Mitnahmeverzahnung 8 des zweiten Reibelementes 3 aufweist. Bei dieser Ausführung ist die Verjüngung der Reibflächenelemente 5 symmetrisch ausgeführt. Es ist auch eine unsymmetrische oder einseitige Abflachung möglich.

Figur 20 zeigt das Reibschaltelement, bei dem die ersten Reibelemente 1 im Bereich der ringförmigen Reibflächen 7 in axialer Richtung eine geringere Dicke als im Bereich der Mitnahmeverzahnung 6 aufweisen, wobei die Reibflächenelemente 5 unverändert bezüglich ihrer Dicke ausgeführt sind. Bei dieser Ausführung ist die Verjüngung der ringförmigen Reibflächen 7 symmetrisch ausgeführt. Es ist auch möglich, dass eine unsymmetrische oder einseitige Abflachung vorgesehen ist.

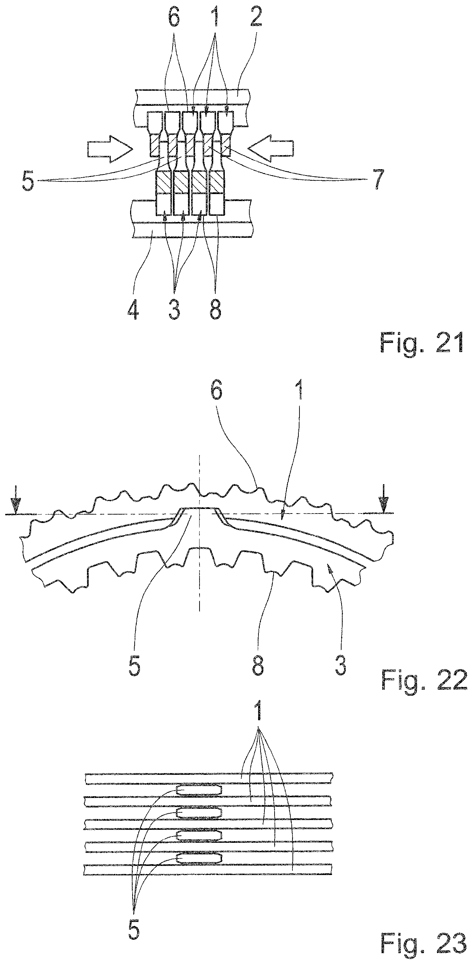

In Figur 21 ist eine Ausführung dargestellt, bei der die in den Figuren 19 und 20 dargestellten Ausführungen miteinander kombiniert werden.

In den Figuren 22 und 23 sind verschiedene Detailansichten des Reibschaltelementes dargestellt, bei denen an dem Reibflächenelement 5 in Umfangsrichtung am Einlauf- und Auslaufbereich Fasen bzw. Radien vorgesehen sind. Die Reibflächenelemente 5 bzw. Reibzähne haben somit in ihrem Einlauf- und Auslaufbereich Fasen oder Radien, um das benachbarte Reibelement zu schonen. Dadurch wird verhindert, dass das Reibflächenelement 5 quasi wie ein Drehmeisel spanabhebend über den Reibpartner gleitet. Außerdem können hierdurch Schleppmomente reduziert werden.

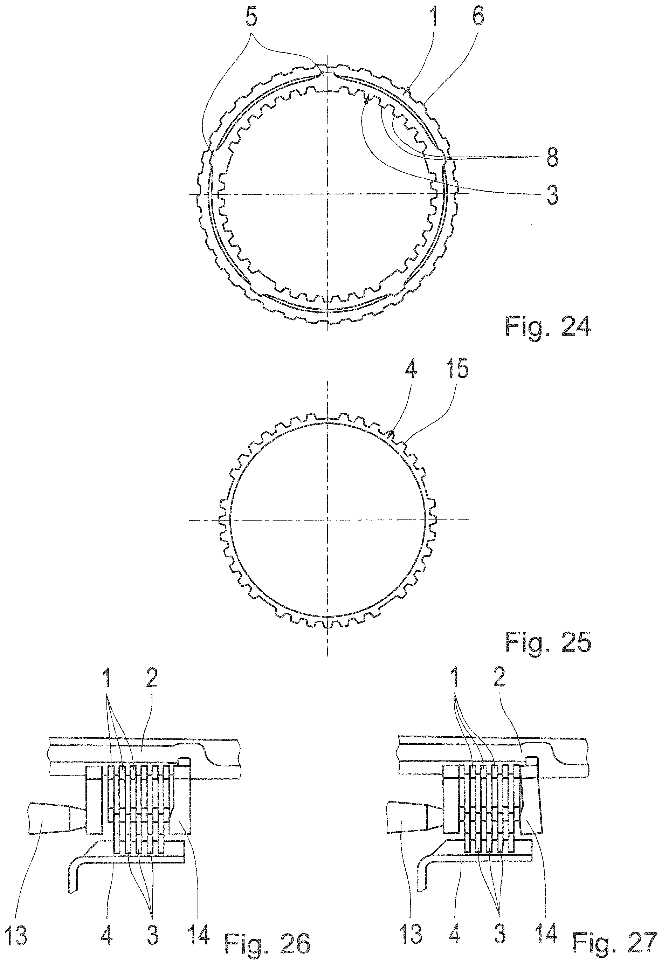

Figur 24 zeigt das vorgeschlagene Reibschaltelement mit einer Montagehilfe, bei der vorgesehen ist, dass die Reibflächenelemente 5 an den Reibelementen 3 des inneren Lamellen-Trägers 4 in axialer Richtung deckungsgleich hintereinander angeordnet sind. Bei der Montage der Reibelemente 1 bzw. 3 gilt es sicherzustellen, dass die Reibflächenelemente 5 bzw. Zähne in axialer Richtung hintereinander liegen. Aus diesem Grund haben die Reibelemente 1, 3 Mitnahmeverzahnungen 6, 8 mit unterschiedlichen Geometrien an einzelnen Zähnen oder Zahnlücken. Eine der Mitnahmeverzahnung 3 entsprechende Montagevorrichtung kann nun die Montage in gewünschter Drehlage sicherstellen. Die Reibelemente 1, 3 sind in dieser Abbildung zusätzlich umschlagsymmetrisch ausgeführt. Umschlagsymmetrisch bedeutet, dass es bei der Montage unerheblich ist, welche Seite nach oben und welche Seite nach unten zeigt. Dies reduziert die Fehlmontagemöglichkeiten.

Innerhalb der Mitnahmeverzahnung 6, 8 sind unterschiedliche Geometrien, wie zum Beispiel unterschiedliche Zahnbreiten und/oder unterschiedliche Zahnlückenbreiten und/oder unterschiedliche Zahnwinkel vorgesehen sind, um in Kombination mit einem korrespondierenden Träger 2, 4 eine Montage mit in axialer Richtung deckungsgleich übereinander angeordneten Reibflächenelementen 5 zu erzwingen.

Wie in Figur 25 gezeigt, hat der Lamellen-Träger 4 die zum Reibelement 3 passende Geometrie bei seiner Mitnahmeverzahnung 15, so dass eine Montage unter falschem Drehwinkel ausgeschlossen wird.

In den Figuren 26 und 27 ist das vorgeschlagene Reibschaltelement mit entsprechendem Lamellenpaket, bestehend aus ersten Reibelementen 1 und zweiten Reibelementen 3 dargestellt, wobei das Lamellenpaket in Figur 26 gelüftet bzw. offen ist und in Figur 27 geschlossen bzw. geschaltet ist. Der Kolben 13 zum Betätigen des Reibschaltelementes und zum Aufbringen der notwendigen Axialkraft wird entsprechend betätigt, so dass die Axialkraft auf das Lamellenpaket aufgebracht wird. Die Kraft wird durch das Lamellenpaket geleitet und an dem letzten Reibelement 1 in den Lamellen-Träger 2 zurückgeführt. Hierdurch tellert das letzte Reibelement 1. Um unabhängig vom Tellern ein gleichmäßiges Tragbild an den Reibflächen zu erreichen, wird vorgeschlagen, dass zumindest ein Stützelement 14 am Anfang und/oder Ende, bei der Darstellung gemäß Figuren 26 und 27, am Ende des Reibelementpaketes bzw. Lamellenpaketes angeordnet und ist vom mittleren Reibflächenradius der korrespondierenden Reibflächen der Reibelemente nach außen oder nach innen, in den gezeigten Ausführungen nach außen hin in axialer Richtung beabstandet.

### Bezugszeichen

- 1: erstes Reibelement bzw. Lamelle
- 2: erster Träger
- 3: zweites Reibelement bzw. Lamelle
- 4: zweiter Träger
- 5: Reibflächenelement
- 6: Mitnahmeverzahnung erstes Reibelement
- 7: ringförmige Reibfläche
- 8: Mitnahmeverzahnung zweites Reibelement
- 9: rippenförmige Verstärkung
- 10, 10A: Federlaschenelement
- 11: Federelement
- 12: Federelement
- 13: Kolben
- 14: Stützelement
- 15: Mitnahmeverzahnung zweiter Träger
- R1,R2: Radius

## Patentansprüche

1. Reibschaltelement für ein Getriebe eines Fahrzeuges, mit zumindest einem einem ersten Träger (2) zugeordneten ersten Reibelement (1) und mit zumindest einem einem zweiten Träger (4) zugeordneten zweiten Reibelement (3) als Reibpartner mit sich überdeckenden Reibflächen, die zur Drehmomentübertragung miteinander in Kontakt bringbar sind, wobei das erste oder das zweite Reibelement (1, 3) eine etwa ringförmig ausgeführte Reibfläche (7) aufweist, wobei das jeweils andere Reibelement (1, 3) als korrespondierende Reibfläche zumindest ein etwa radial in den Überdeckungsbereich kragendes Reibflächenelement (5) aufweist, **dadurch gekennzeichnet, dass** das Reibflächenelement (5) einteilig an das erste oder zweite Reibelement (1, 3) angeformt ist..

2. Reibschaltelement nach Anspruch 1, **dadurch gekennzeichnet, dass** die miteinander in Reibschluss bringbaren ersten und zweiten Reibelemente (1, 3), abgesehen von dem zumindest einen vorkragenden Reibflächenelement (5), in radialer Richtung voneinander beabstandet sind.

3. Reibschaltelement nach Anspruch 1 oder 2, **dadurch gekennzeichnet, dass** mehrere Reibflächenelemente (5) über den Umfang eines etwa ringförmigen Grundkörpers des ersten oder zweiten Reibelementes (1, 3) verteilt angeordnet sind.

4. Reibschaltelement nach einem der vorangehenden Ansprüche, **dadurch gekennzeichnet, dass** das erste Reibelement (1) als Außenlamelle und das zweite Reibelement (3) als Innenlamelle ausgeführt sind, wobei die etwa ringförmig ausgeführte Außenlamelle eine äußere Mitnahmeverzahnung (6) zum Verbinden mit dem Außenlamellen-Träger (2) und eine etwa ringförmige Reibfläche (7) aufweist und wobei die Innenlamelle eine innere Mitnahmeverzahnung (8) zum Verbinden mit dem Innenlamellen-Träger (4) und mehrere über den Umfang verteilt radial nach außen kragende und in Überdeckung mit der ringförmigen Reibfläche (7) der Außenlamelle stehende Reibflächenelemente (5) aufweist. (Fig. 1 und 2)

5. Reibschaltelement nach einem der Ansprüche 1 bis 3, **dadurch gekennzeichnet, dass** das erste Reibelement (1) als Außenlamelle und das zweite Reibelement (3) als Innenlamelle ausgeführt sind, wobei die etwa ringförmig ausgeführte Innenlamelle eine innere Mitnahmeverzahnung (8) zum Verbinden mit dem Innenlamellen-Träger (4) und eine etwa ringförmige Reibfläche (7) aufweist und wobei die Außenlamelle eine äußere Mitnahmeverzahnung (6) zum Verbinden mit dem Außenlamellen-Träger (2) und mehrere über den Umfang verteilt radial nach innen kragende und in Überdeckung mit der ringförmigen Reibfläche (7) der Innenlamelle stehende Reibflächenelemente (5) aufweist. (Fig. 3 und 4)

6. Reibschaltelement nach einem der vorangehenden Ansprüche, **dadurch gekennzeichnet, dass** jedes Reibflächenelement (5) etwa zahnförmig an den ringförmigen Grundkörper des Reibelementes (1, 3) angeformt ist. (Fig. 5 und 5A)

7. Reibschaltelement nach Anspruch 6, **dadurch gekennzeichnet, dass** das zahnförmige Reibflächenelement (5) über unterschiedliche hintereinanderliegende Radien (R1, R2) an das ringförmige Reibelement (1, 3) angeformt ist. (Fig. 5 und 5A)

8. Reibschaltelement nach Anspruch 7, **dadurch gekennzeichnet, dass** der Radius (R1) im Bereich des inneren oder äußeren Umfanges des ringförmigen Grundkörpers größer ist, als der Radius (R2) im Bereich der zahnförmigen Reibfläche des Reibflächenelementes (5). (Fig. 5A)

9. Reibschaltelement nach einem der vorangehenden Ansprüche, **dadurch gekennzeichnet, dass** in Umfangsrichtung beidseitig eine rippenförmige Verstärkung (9) an das Reibflächenelement (5) angeformt ist. (Fig. 6 und 7)

10. Reibschaltelement nach einem der vorangehenden Ansprüche, **dadurch gekennzeichnet, dass** an zumindest einem Reibflächenelement (5) in Umfangsrichtung zumindest ein in axialer Richtung des Reibelementes (1, 3) federndes Federlaschenelement (10, 10A) zur Zwangsdistanzierung von Reibelementen (1, 3) im unbetätigten Zustand des Reibschaltelementes vorgesehen ist. (Figuren 8 bis 16)

11. Reibschaltelement nach Anspruch 10, **dadurch gekennzeichnet, dass** das Federlaschenelement (10, 10A) einteilig mit dem Reibflächenelement (5) ausgeführt ist. (Figuren 8 bis 16)

12. Reibschaltelement nach Anspruch 10 oder 11, **dadurch gekennzeichnet, dass** an zumindest einem Reibflächenelement (5) beidseitig in Umfangsrichtung Federlaschenelemente (10, 10A) vorgesehen sind. (Figuren 8 bis 16)

13. Reibschaltelement nach Anspruch 12, **dadurch gekennzeichnet, dass** die Federlaschenelemente (10, 10A) in axialer Richtung entgegengesetzt von dem jeweiligen Reibelement (1, 3) vorstehend angeordnet sind. (Figuren 8 bis 16)

14. Reibschaltelement nach Anspruch 13, **dadurch gekennzeichnet, dass** die Federlaschenelemente (10, 10A) an einem Reibelement (1, 3) entgegengesetzt auf benachbarte Reibelemente (1, 3) desselben Trägers (2, 4) wirken. (Figuren 8 bis 16)

15. Reibschaltelement nach einem der vorangehenden Ansprüche, **dadurch gekennzeichnet, dass** Reibelemente (1, 3) desselben Trägers (2, 4) im Bereich der jeweiligen Mitnahmeverzahnung (6, 8) über Federelemente zwangsdistanziert sind. (Fig. 17)

16. Reibschaltelement nach einem der vorangehenden Ansprüche, **dadurch gekennzeichnet, dass** jeweils benachbarte erste und zweite Reibelemente (1, 3) an den einander zugewandten Reibflächen in axialer Richtung abgeschrägt oder konisch ausgeführt sind. (Fig. 18)

17. Reibschaltelement nach einem der vorangehenden Ansprüche, **dadurch gekennzeichnet, dass** das Reibflächenelement (5) in axialer Richtung eine geringere Dicke als im Bereich der Mitnahmeverzahnung (6, 8) des jeweiligen Reibelementes (1, 3) aufweist.(Fig. 19)

18. Reibschaltelement nach einem der vorangehenden Ansprüche, **dadurch gekennzeichnet, dass** das Reibelement (1, 3) im Bereich der ringförmigen Reibfläche (7) in axialer Richtung eine geringere Dicke als im Bereich der Mitnahmeverzahnung (6, 8) aufweist. (Fig. 20 und 21)

19. Reibschaltelement nach einem der vorangehenden Ansprüche, **dadurch gekennzeichnet, dass** an dem Reibflächenelement (5) in Umfangsrichtung am Einlauf-und/oder Auslaufbereich Fasen oder Radien vorgesehen sind. (Figuren 22 und 23)

20. Reibschaltelement nach einem der vorangehenden Ansprüche, **dadurch gekennzeichnet, dass** die Reibflächenelemente (5) der Reibelemente (1, 3) eines gemeinsamen Trägers (2, 4) in axialer Richtung deckungsgleich hintereinander angeordnet sind. (Fig. 24)

21. Reibschaltelement nach einem der vorangehenden Ansprüche, **dadurch gekennzeichnet, dass** innerhalb einer Mitnahmeverzahnung (6, 8, 15) unterschiedliche Zahnbreiten und/oder unterschiedliche Zahnlückenbreiten und/oder unterschiedliche Zahnwinkel als Montagehilfe zur axialen deckungsgleichen Anordnung der Reibflächenelemente (5) vorgesehen sind. (Figuren 24 und 25)

22. Reibschaltelement nach einem der vorangehenden Ansprüche, **dadurch gekennzeichnet, dass** jedes Reibelement (1, 3) umschlagsymmetrisch ausgeführt ist. (Fig. 24)

23. Reibschaltelement nach einem der vorangehenden Ansprüche, **dadurch gekennzeichnet, dass** zumindest ein Stützelement (14) axial gesehen am Anfang und/oder Ende des Lamellenpaktes angeordnet ist und vom mittleren Reibflächenradius der korrespondierenden Reibflächen der Reibelemente (1, 3) des Lamellenpaketes nach außen oder nach innen hin in axialer Richtung beabstandet ist. (Fig. 26 und 27)

24. Reibschaltelement nach einem der vorangehenden Ansprüche, **dadurch gekennzeichnet, dass** ein nasslaufendes Reibschaltelement vorgesehen ist.

25. Reibschaltelement nach einem der vorangehenden Ansprüche, **dadurch gekennzeichnet, dass** zumindest eines der ersten und/oder zweiten Reibelemente (1, 3) wenigstens eine Nutung im Bereich der Reibfläche (7) und/oder im Bereich des Reibflächenelementes (5) aufweist.

26. Reibschaltelement nach einem der vorangehenden Ansprüche, **dadurch gekennzeichnet, dass** die Reibelemente (1, 3) aus gehärtetem Stahl und/oder aus nitrocarburiertem Stahl bestehen.

27. Reibschaltelement nach einem der vorangehenden Ansprüche, **dadurch gekennzeichnet, dass** das Reibschaltelement als abschaltendes Schaltelement in einen Automatgetriebe verwendet wird.

## Claims

1. Frictional shifting element for a transmission of a vehicle, with at least one first friction element (1) which is assigned to a first carrier (2), and with at least one second friction element (3) which is assigned to a second carrier (4), as friction partners with overlapping friction faces which can be brought into contact with one another for the transmission of torque, the first or the second friction element (1, 3) having a friction face (7) of approximately annular configuration, the respective other friction element (1, 3) having, as a corresponding friction face, at least one friction face element (5) which projects approximately radially into the overlap region, **characterized in that** the friction face element (5) is formed integrally onto the first or second friction element (1, 3).

2. Frictional shifting element according to Claim 1, **characterized in that** the first and second friction elements (1, 3) which can be brought into a frictionally locking connection with one another are spaced apart from one another in the radial direction, apart from the at least one projecting friction face element (5).

3. Frictional shifting element according to Claim 1 or 2, **characterized in that** a plurality of friction face elements (5) are arranged distributed over the circumference of an approximately annular main body of the first or second friction element (1, 3).

4. Frictional shifting element according to one of the preceding claims, **characterized in that** the first friction element (1) is configured as an outer disc and the second friction element (3) is configured as an inner disc, the outer disc of approximately annular configuration having an approximately annular friction face (7) and an outer driving toothing system (6) for the connection to the outer disc carrier (2), and the inner disc having an inner driving toothing system (8) for the connection to the inner disc carrier (4), and having a plurality of friction face elements (5) which project radially to the outside in a manner which is distributed over the circumference and overlap with the annular friction face (7) of the outer disc (Figs 1 and 2).

5. Frictional shifting element according to one of Claims 1 to 3, **characterized in that** the first friction element (1) is configured as an outer disc and the second friction element (3) is configured as an inner disc, the inner disc of approximately annular configuration having an approximately annular friction face (7) and an inner driving toothing system (8) for the connection to the inner disc carrier (4), and the outer disc having an outer driving toothing system (6) for the connection to the outer disc carrier (2), and having a plurality of friction face elements (5) which project radially to the inside in a manner which is distributed over the circumference and overlap with the annular friction face (7) of the inner disc (Figs 3 and 4).

6. Frictional shifting element according to one of the preceding claims, **characterized in that** each friction face element (5) is formed in an approximately tooth-shaped manner on the annular main body of the friction element (1, 3) (Figs 5 and 5A).

7. Frictional shifting element according to Claim 6, **characterized in that** the tooth-shaped friction face element (5) is formed on the annular friction element (1, 3) via different radii (R1, R2) which lie behind one another (Figs 5 and 5A).

8. Frictional shifting element according to Claim 7, **characterized in that** the radius (R1) in the region of the inner or outer circumference of the annular main body is greater than the radius (R2) in the region of the tooth-shaped friction face of the friction face element (5) (Fig. 5A).

9. Frictional shifting element according to one of the preceding claims, **characterized in that** a rib-shaped reinforcement (9) is formed on the friction face element (5) on both sides in the circumferential direction (Figs 6 and 7).

10. Frictional shifting element according to one of the preceding claims, **characterized in that** at least one spring clip element (10, 10A) which is resilient in the axial direction of the friction element (1, 3) is provided on at least one friction face element (5) in the circumferential direction for the forcible distancing of friction elements (1, 3) in the non-actuated state of the frictional shifting element (Figures 8 to 16).

11. Frictional shifting element according to Claim 10, **characterized in that** the spring clip element (10, 10A) is configured in one piece with the friction face element (5) (Figures 8 to 16).

12. Frictional shifting element according to Claim 10 or 11, **characterized in that** spring clip elements (10, 10A) are provided on at least one friction face element (5) on both sides in the circumferential direction (Figures 8 to 16).

13. Frictional shifting element according to Claim 12, **characterized in that** the spring clip elements (10, 10A) are arranged so as to project from the respective friction element (1, 3) in an opposed manner in the axial direction (Figures 8 to 16).

14. Frictional shifting element according to Claim 13, **characterized in that** the spring clip elements (10, 10A) on a friction element (1, 3) act in an opposed manner on adjoining friction elements (1, 3) of the same carrier (2, 4) (Figures 8 to 16).

15. Frictional shifting element according to one of the preceding claims, **characterized in that** friction elements (1, 3) of the same carrier (2, 4) are forcibly distanced in the region of the respective driving toothing system (6, 8) via spring elements (Fig. 17).

16. Frictional shifting element according to one of the preceding claims, **characterized in that** respective adjoining first and second friction elements (1, 3) are of bevelled or conical configuration in the axial direction on the friction faces which face one another (Fig. 18).

17. Frictional shifting element according to one of the preceding claims, **characterized in that** the friction face element (5) has a smaller thickness in the axial direction than in the region of the driving toothing system (6, 8) of the respective friction element (1, 3) (Fig. 19).

18. Frictional shifting element according to one of the preceding claims, **characterized in that** the friction element (1, 3) has a smaller thickness in the axial direction in the region of the annular friction face (7) than in the region of the driving toothing system (6, 8) (Figs 20 and 21).

19. Frictional shifting element according to one of the preceding claims, **characterized in that** chamfers or radii are provided in the circumferential direction on the inlet and/or outlet region on the friction face element (5) (Figures 22 and 23).

20. Frictional shifting element according to one of the preceding claims, **characterized in that** the friction face elements (5) of the friction elements (1, 3) of a common carrier (2, 4) are arranged congruently behind one another in the axial direction (Fig. 24).

21. Frictional shifting element according to one of the preceding claims, **characterized in that** different tooth widths and/or different tooth gap widths and/or different tooth angles are provided within a driving toothing system (6, 8, 15) as a mounting aid for axial congruent arrangement of the friction face elements (5) (Figures 24 and 25).

22. Frictional shifting element according to one of the preceding claims, **characterized in that** each friction element (1, 3) is of symmetrical configuration (Fig. 24).

23. Frictional shifting element according to one of the preceding claims, **characterized in that**, as viewed axially, at least one supporting element (14) is arranged at the start and/or end of the multiple disc assembly, and is spaced apart in the axial direction towards the outside or towards the inside from the middle friction face radius of the corresponding friction faces of the friction elements (1, 3) of the multiple disc assembly (Figs 26 and 27).

24. Frictional shifting element according to one of the preceding claims, **characterized in that** a wet-running frictional shifting element is provided.

25. Frictional shifting element according to one of the preceding claims, **characterized in that** at least one of the first and/or second friction elements (1, 3) has at least one groove system in the region of the friction face (7) and/or in the region of the friction face element (5) .

26. Frictional shifting element according to one of the preceding claims, **characterized in that** the friction elements (1, 3) consist of hardened steel and/or of carbonitrided steel.

27. Frictional shifting element according to one of the preceding claims, **characterized in that** the frictional shifting element is used as a disconnecting shifting element in an automatic transmission.

## Revendications

1. Elément de changement de vitesses à friction pour une boîte de vitesses d'un véhicule, comprenant au moins un premier élément de friction (1) associé à un premier support (2) et au moins un deuxième élément de friction (3) associé à un deuxième support (4) en tant que partenaire de friction, avec des surfaces de friction se recouvrant, qui peuvent être amenées en contact les unes avec les autres pour le transfert de couple, le premier ou le deuxième élément de friction (1, 3) présentant une surface de friction (7) réalisée de manière approximativement annulaire, l'autre élément de friction respectif (1, 3) présentant, en tant que surface de friction correspondante, au moins un élément de surface de friction (5) saillant approximativement radialement dans la région de recouvrement, **caractérisé en ce que** l'élément de surface de friction (5) est façonné d'une seule pièce sur le premier ou le deuxième élément de friction (1, 3).

2. Elément de changement de vitesses à friction selon la revendication 1, **caractérisé en ce que** les premiers et deuxièmes éléments de friction (1, 3) pouvant être amenés en contact de friction les uns avec les autres sont espacés les uns des autres dans la direction radiale, à l'exception de l'au moins un élément de surface de friction en saillie (5) .

3. Elément de changement de vitesses à friction selon la revendication 1 ou 2, **caractérisé en ce que** plusieurs éléments de surface de friction (5) sont répartis sur la périphérie d'un corps de base approximativement annulaire du premier ou du deuxième élément de friction (1, 3).

4. Elément de changement de vitesses à friction selon l'une quelconque des revendications précédentes, **caractérisé en ce que** le premier élément de friction (1) est réalisé sous forme de lamelle extérieure et le deuxième élément de friction (3) est réalisé sous forme de lamelle intérieure, la lamelle extérieure réalisée sous forme approximativement annulaire présentant une denture d'entraînement extérieure (6) pour la connexion au support de lamelle extérieure (2) et une surface de friction (7) approximativement annulaire, et la lamelle intérieure présentant une denture d'entraînement intérieure (8) pour la connexion au support de lamelle intérieure (4) et plusieurs éléments de surface de friction (5) répartis sur la périphérie, saillant radialement vers l'extérieur et en coïncidence avec la surface de friction annulaire (7) de la lamelle extérieure. (figures 1 et 2) .

5. Elément de changement de vitesses à friction selon l'une quelconque des revendications 1 à 3, **caractérisé en ce que** le premier élément de friction (1) est réalisé sous forme de lamelle extérieure et le deuxième élément de friction (3) est réalisé sous forme de lamelle intérieure, la lamelle intérieure réalisée sous forme approximativement annulaire présentant une denture d'entraînement intérieure (8) pour la connexion au support de lamelle intérieure (4) et une surface de friction (7) approximativement annulaire, et la lamelle extérieure présentant une denture d'entraînement extérieure (6) pour la connexion au support de lamelle extérieure (2) et plusieurs éléments de surface de friction (5) répartis sur la périphérie, saillant radialement vers l'intérieur et en coïncidence avec la surface de friction annulaire (7) de la lamelle intérieure. (figures 3 et 4)

6. Élément de changement de vitesses à friction selon l'une quelconque des revendications précédentes, **caractérisé en ce que** chaque élément de surface de friction (5) est façonné approximativement en forme de dent au niveau du corps de base annulaire de l'élément de friction (1, 3). (figures 5 et 5A)

7. Élément de changement de vitesses à friction selon la revendication 6, **caractérisé en ce que** l'élément de surface de friction en forme de dent (5) est façonné par le biais de différents rayons disposés les uns derrière les autres (R1, R2) au niveau de l'élément de friction annulaire (1, 3). (figures 5 et 5A)

8. Élément de changement de vitesses à friction selon la revendication 7, **caractérisé en ce que** le rayon (R1) dans la région de la périphérie intérieure ou extérieure du corps de base annulaire est supérieur au rayon (R2) dans la région de la surface de friction en forme de dent de l'élément de surface de friction (5). (figure 5A)

9. Élément de changement de vitesses à friction selon l'une quelconque des revendications précédentes, **caractérisé en ce qu'**un renforcement en forme de nervure (9) est façonné dans la direction périphérique des deux côtés au niveau de l'élément de surface de friction (5). (figures 6 et 7)

10. Élément de changement de vitesses à friction selon l'une quelconque des revendications précédentes, **caractérisé en ce qu'**au moins un élément de patte élastique (10, 10A) fournissant un effet de ressort dans la direction axiale de l'élément de friction (1, 3) est prévu au niveau d'au moins un élément de surface de friction (5) dans la direction périphérique pour l'espacement forcé des éléments de friction (1, 3) dans l'état non actionné de l'élément de changement de vitesses à friction. (figures 8 à 16)

11. Élément de changement de vitesses à friction selon la revendication 10, **caractérisé en ce que** l'élément de patte élastique (10, 10A) est réalisé d'une seule pièce avec l'élément de surface de friction (5). (figures 8 à 16)

12. Élément de changement de vitesses à friction selon la revendication 10 ou 11, **caractérisé en ce que** des éléments de pattes élastiques (10, 10A) sont prévus des deux côtés dans la direction périphérique au niveau d'au moins un élément de surface de friction (5). (figures 8 à 16)

13. Élément de changement de vitesses à friction selon la revendication 12, **caractérisé en ce que** les éléments de pattes élastiques (10, 10A) sont disposés en saillie dans la direction axiale à l'opposé de l'élément de friction respectif (1, 3). (figures 8 à 16)

14. Élément de changement de vitesses à friction selon la revendication 13, **caractérisé en ce que** les éléments de pattes élastiques (10, 10A) agissent au niveau d'un élément de friction (1, 3) de manière opposée sur des éléments de friction adjacents (1, 3) du même support (2, 4). (figures 8 à 16)

15. Élément de changement de vitesses à friction selon l'une quelconque des revendications précédentes, **caractérisé en ce que** des éléments de friction (1, 3) du même support (2, 4) sont espacés par force dans la région de la denture d'entraînement respective (6, 8) par le biais d'éléments de ressort, (figure 17)

16. Élément de changement de vitesses à friction selon l'une quelconque des revendications précédentes, **caractérisé en ce que** des premier et deuxième éléments de friction respectivement adjacents (1, 3) sont réalisés sous forme conique ou biseautée dans la direction axiale au niveau des surfaces de friction tournées l'une vers l'autre. (figure 18)

17. Élément de changement de vitesses à friction selon l'une quelconque des revendications précédentes, **caractérisé en ce que** l'élément de surface de friction (5) présente, dans la direction axiale, une plus faible épaisseur que dans la région de la denture d'entraînement (6, 8) de l'élément de friction respectif (1, 3). (figure 19)

18. Élément de changement de vitesses à friction selon l'une quelconque des revendications précédentes, **caractérisé en ce que** l'élément de friction (1, 3), dans la région de la surface de friction annulaire (7) dans la direction axiale, présente une épaisseur plus faible que dans la région de la denture d'entraînement (6, 8). (figures 20 et 21)

19. Élément de changement de vitesses à friction selon l'une quelconque des revendications précédentes, **caractérisé en ce que** des biseaux ou des rayons sont prévus au niveau de l'élément de surface de friction (5) dans la direction périphérique au niveau de la région d'entrée et/ou de sortie. (figures 22 et 23)

20. Élément de changement de vitesses à friction selon l'une quelconque des revendications précédentes, **caractérisé en ce que** les éléments de surface de friction (5) des éléments de friction (1, 3) d'un support commun (2, 4) sont disposés les uns derrière les autres en coïncidence dans la direction axiale. (figure 24)

21. Élément de changement de vitesses à friction selon l'une quelconque des revendications précédentes, **caractérisé en ce qu'**à l'intérieur d'une denture d'entraînement (6, 8, 15) des largeurs de dents différentes et/ou des largeurs d'espaces entre les dents différentes et/ou des angles de dents différents sont prévus en tant qu'auxiliaire de montage pour l'agencement des éléments de surface de friction (5) en coïncidence axiale. (figures 24 et 25)

22. Élément de changement de vitesses à friction selon l'une quelconque des revendications précédentes, **caractérisé en ce que** chaque élément de friction (1, 3) est réalisé avec une symétrie de pliage. (figure 24).

23. Élément de changement de vitesses à friction selon l'une quelconque des revendications précédentes, **caractérisé en ce qu'**au moins un élément de support (14), vu axialement, est disposé au début et/ou à la fin du paquet de lamelles et est espacé du rayon de surface de friction central des surfaces de friction correspondantes des éléments de friction (1, 3) du paquet de lamelles vers l'extérieur ou vers l'intérieur dans la direction axiale. (figures 26 et 27)

24. Élément de changement de vitesses à friction selon l'une quelconque des revendications précédentes, **caractérisé en ce qu'**il est prévu un élément de changement de vitesses à friction de type humide.

25. Élément de changement de vitesses à friction selon l'une quelconque des revendications précédentes, **caractérisé en ce qu'**au moins l'un des premiers et/ou deuxièmes éléments de friction (1, 3) présente au moins un rainurage dans la région de la surface de friction (7) et/ou dans la région de l'élément de surface de friction (5).

26. Élément de changement de vitesses à friction selon l'une quelconque des revendications précédentes, **caractérisé en ce que** les éléments de friction (1, 3) se composent d'acier trempé et/ou d'acier nitrocarburé.

27. Élément de changement de vitesses à friction selon l'une quelconque des revendications précédentes, **caractérisé en ce que** l'élément de changement de vitesses à friction est utilisé en tant qu'élément de changement de vitesses à coupure dans une transmission automatique.
